# EUROPÄISCHE PATENTSCHRIFT

(11) **EP 1 003 271 B1**
(45) Veröffentlichungstag und Bekanntmachung des Hinweises auf die Patenterteilung: **10.01.2007**
(21) Anmeldenummer: 99120038.7
(22) Anmeldetag: 18.10.1999
(51) Int. Cl.: H02K 51/00, H02P 17/00, H03K 17/0814

(54) **Einrichtung zum Schalten von Strömen in einer Statorwicklung einer Generator-Elektromotor-Kombination**
Device for switching currents in the stator windings of a motor generator combination
Dispositif de commutation des courants dans les bobines du stator d'une combinaison moteur/générateur

(30) Priorität: 20.11.1998 DE 19853516
(43) Veröffentlichungstag der Anmeldung: 24.05.2000
(73) Patentinhaber: Volkswagen Aktiengesellschaft, 38436 Wolfsburg (DE)
(72) Erfinder: Schulze, Bernd-Guido, Dr., 38442 Wolfsburg (DE); Raav, Stefan, Dipl.-Ing., 38108 Braunschweig (DE); Martin, Sven, 38448 Wolfsburg (DE); Dittner, Adam, 91315 Höchstadt (DE)

(56) Entgegenhaltungen:
- DD-A- 238 141
- DE-A- 3 435 069
- GB-A- 2 310 333

## Beschreibung

Die Erfindung betrifft eine Einrichtung zum Schalten von Strömen in einer Statorwicklung einer Generator-Elektromotor-Kombination, wobei die Statorwicklung mindestens eine Wicklung aufweist, die durch die Einrichtung kurzschließbar oder hochohmig schaltbar ist.

Eine derartige Generator-Elektromotor-Kombination ist aus der deutschen Patentschrift DE 44 08 719 der Anmelderin bekannt. Hierbei ist vorgesehen, daß die Generator-Elektromotor-Kombination ein Gehäuse aufweist, in dem ein Rotor und ein Stator sowohl des Generators als auch des Elektromotors angeordnet sind, die einen an einer Eingangswelle befestigten hohlzylindrischen Generator-Rotor und einen an einer Ausgangswelle befestigten hohlzylindrischen Motor-Rotor aufweist, wobei die Rotoren axial nebeneinander liegen und an ihrer Innenseite in Umfangsrichtung verteilt Permanent-Magnete wechselnder Polarität aufweisen, und die einen innerhalb der hohlzylindrischen Rotoren angeordneten hohlzylindrischen Stator mit wenigstens einer Wicklung, die abhängig von der Stellung der Permanent-Magnete der beiden Rotoren zueinander geschaltet werden, besitzt. Hierbei wird die Statorwicklung je nach gewünschter Kraftrichtung des Elektromotors durch wechselseitiges Schalten von als Schaltelemente fungierenden Leistungshalbleitern einer Halbbrücke der bekannten Einrichtung je nach der Pollage des Elektromotors kurzgeschlossen oder hochohmig geschaltet.

Nachteilig an der bekannten Einrichtung ist, daß beim Abschalten des Stromes in der Statorwicklung die in der Induktivität gespeicherte Energie zwangsläufig verlorengeht. Außerdem ist nachteilig, daß durch die beim Abschalten entstehenden extrem hohen Spannungsspitzen die Schaltelemente gefährdet werden.

Es ist daher Aufgabe der vorliegenden Erfindung, eine Einrichtung der eingangs genannten Art derart weiterzubilden, daß zumindest eine Reduzierung der beim Abschalten entstehenden Spannungsspitzen erzielt wird.

Diese Aufgabe wird erfindungsgemäß durch die kennzeichnenden Merkmale des Anspruchs 1 gelöst.

Vorteilhafte Weiterbildungen der Erfindung sind Gegenstand der Unteransprüche.

Weitere Einzelheiten und Vorteile der Erfindung sind dem Ausführungsbeispiel zu entnehmen, daß im folgenden anhand der Figuren beschrieben wird. Es zeigen:
- Figur 1: ein Blockschaltbild eines ersten Ausführungsbeispiels der Einrichtung,
- Figur 2: ein Blockschaltbild eines zweiten Ausführungsbeispiels der Einrichtung,
- Figur 3: eine schematische Querschnittszeichnung durch eine Generator-Elektromotor-Kombination,
- Figur 4: eine schematische Darstellung der Überdeckung der Statorwicklung über den Permanent-Magneten der Rotoren des Generators und des Elektromotors gemäß Figur 3.

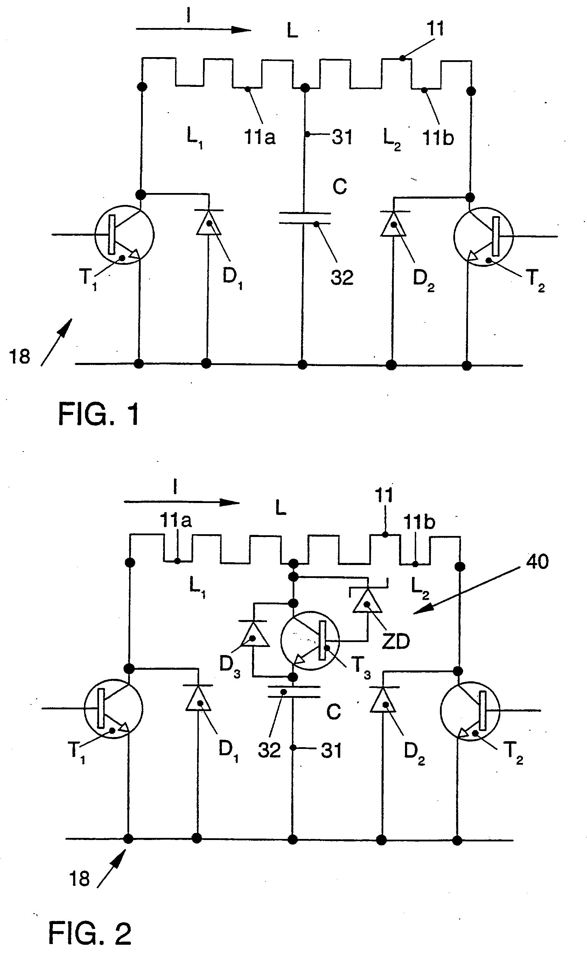

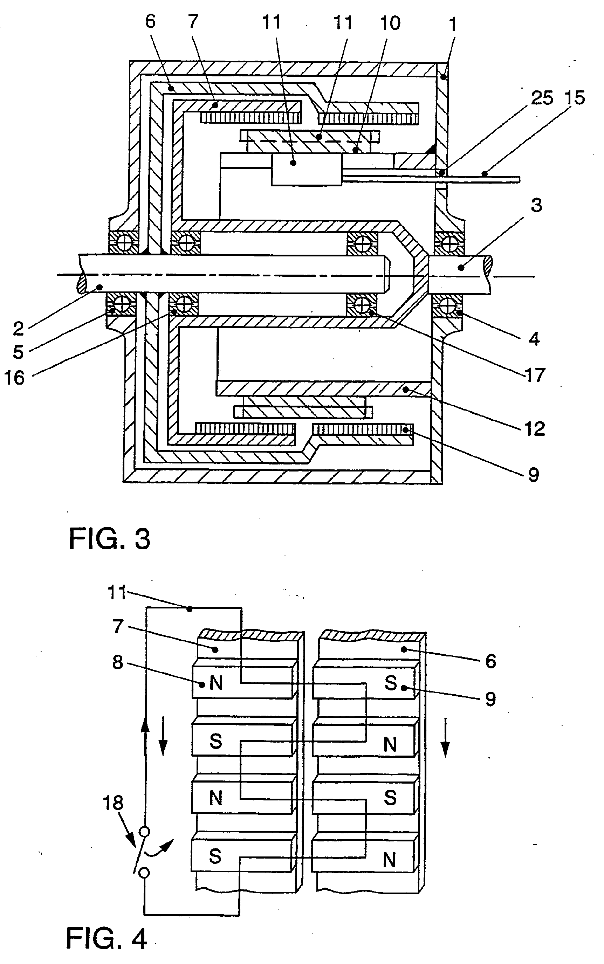

Bevor nun die beiden in den Figuren 1 und 2 dargestellten Ausführungsbeispiele einer Einrichtung zum Schalten von Strömen in einer Statorwicklung einer Generator-Elektromotor-Kombination näher erläutert werden, soll der besseren Verständlichkeit halber zunächst kurz die in den Figuren 3 und 4 dargestellte Generator-Elektromotor-Kombination erläutert werden, welche bereits aus der DE 44 08 719 C1 bekannt ist, so daß zur Vermeidung von Wiederholungen bezüglich weiter unten nicht aufgeführter Merkmale dieser Generator-Elektromotor-Kombination auf diese Druckschrift explizit bezuggenommen und deren technische Lehre durch diese Bezugnahme zum Gegenstand der vorliegenden Anmeldung gemacht wird.

In Figur 3 ist in schematischer Darstellung ein Querschnitt durch ein Ausführungsbeispiel der Generator-Elektromotor-Kombination dargestellt. In das mit 1 bezeichnete Gehäuse führt eine Eingangswelle 2, die mit einer nicht dargestellten Antriebsmaschine verbunden ist. Diese Eingangswelle 2 ist über ein Lager 5 in dem Gehäuse 1 abgestützt und trägt einen mit 6 bezeichneten Generator-Rotor. Dieser Generator-Rotor ist hohlzylindrisch ausgebildet und weist an dem äußeren Ende seiner Längsstreckung nach innen weisende Permanent-Magneten 9 auf, die entlang des Umfangs des Generator-Rotors befestigt sind und eine wechselnde Polarität aufweisen.

Auf der dem Lager 5 gegenüberliegenden Seite des Gehäuses 1 tritt die Ausgangswelle 3 aus dem Gehäuse 1 aus. Diese Ausgangswelle 3 stützt sich über ein Lager 4 in dem Gehäuse 1 ab und ist mit einem im wesentlichen hohlzylindrisch ausgebildeten Elektromotor-Rotor 7 verbunden. Dieser Rotor 7 ist über Lager 16, 17 auf der tief in das Gehäuse geführten Eingangswelle 2 abgelagert. Ebenso wie der Generator-Rotor 6 trägt auch der Motor-Rotor 7 am Ende seiner hohlzylindrischen Längserstreckung nach innen weisende Permanent-Magnete 8 mit wechselnder Polarität.

Von besonderer Bedeutung für den kurzen Aufbau der Generator-Elektromotor-Kombination ist, daß der Generator-Rotor 6 den Elektromotor-Rotor 7 derart umspannt, daß die Permanent-Magneten 9 des Generator-Rotors 6 in Richtung zur Ausgangswelle 3 hinter den Permanent-Magneten 8 des Motor-Rotors 7 angeordnet sind.

Von der Innenseite des Gehäuses 1 erstreckt sich in den hohlzylindrischen Raum des Generator- und Motor-Rotors ein Statorträger 12, der ebenfalls hohlzylindrisch ausgebildet ist und die Eingangs- und Ausgangswelle 2, 3 umfaßt. Auf diesem Statorträger 12 ist eine Schiebehülse 13 angeordnet, die den Stator 10 der Elektromaschine trägt.

Auf dem Stator 10 ist wenigstens eine schaltbare Wicklung 11 aufgebracht, die in Wirkzusammenhang mit den Permanent-Magneten 8, 9 der Rotoren 6, 7 von dem Generator- und dem Elektromotorteil steht.

Der Stator 10 ist zusammen mit der Schiebehülse 13 über eine Stange 15 koaxial zur Eingangs- und Ausgangswelle 2, 3 verschiebbar, wobei die Stange 15 durch eine Öffnung 25 in dem Gehäuse 1 hindurchdurchragt.

Die axiale Verschieblichkeit der Wicklung 11 des Stators 10 bewirkt, daß die wirksame Leiterlänger im Generator- und Motorteil variiert werden kann. Auf diese Variation der Leiterlänger in den Magnetfeldern von Motor- und Generatorteil berührt die Steuer- bzw. Regelbarkeit der Drehzahl- und Momentenübersetzung der erfindungsgemäßen Gleichstrom-Maschine.

In Figur 4 ist die Anordnung der Permanent-Magneten 8, 9 auf den Generator- und Elektromotor-Rotoren 6, 7 schematisch dargestellt. Die Pfeile markieren die Drehrichtung der Rotoren und die nur teilweise dargestellte Wicklung 11 ist in einer Statorposition dargestellt, wie sie der gemäß Figur 1 entspricht. Eine Schalter-Einrichtung 18 in der Wicklung 11 verdeutlicht, daß diese - wie nachstehend noch detailliert beschrieben - kurzschließbar ist.

Wird der generatorische Magnetensatz mit dem Rotor 6 bei kurzgeschlossener Wicklung (Schalter-Einrichtung 18 geschlossen) vom Verbrennungsmotor angetrieben, so wird durch die Bewegung der Permanent-Magnete 9 eine Spannung in der Wicklung 11 induziert, die in dieser Leiterschleife einen Stromfluß zur Folge hat. Dieser Strom bewirkt, sofern sich auf den Rotoren 6, 7 Permanent-Magnete entgegengesetzter Polarität befinden, eine Kraft auf den Motor-Rotor 7, die die selbe Richtung hat, wie die Drehbewegung des Antriebs (Generator-Rotor 6). Stehen sich jeweils zwei gleichsinnige Pole gegenüber, wo wirkt die Kraft in die entgegengesetzte Richtung.

Ist die Wicklung 11 permanent kurzgeschlossen, so wirkt bei Drehung der Generator-Seite eine Kraft mit ständig wechselndem Vorzeichen auf den Antrieb. Es kommt daher auch bei abtriebsseitigen Leerlauf keine Drehbewegung zustande. Je nachdem welche Kraftrichtung am Abtrieb, das heißt am Motor-Rotor 7 erwünscht ist, gibt es also immer eine "richtige" und eine "falsche" Stellung der beiden Permanent-Magnet-Sätze zueinander.

Ein wesentliches Merkmal der hier vorgestellten Erfindung ist es daher, den Stromfluß für die "richtige" Stellung der Magneten zu ermöglichen (Schalter-Einrichtung 18 in Figur 2 geschlossen) und für die "falsche" Stellung der Permanent-Magnete zu unterbinden (Schalter-Einrichtung 18 offen).

Wie bereits dargelegt und wie in den Figuren 1 und 2 durch das Schaltersymbol für die Schalter-Einrichtung 18 angedeutet wurde, muß die Statorwicklung in Abhängigkeit von der Lage der einzelnen Pole der Permanent-Magnete 8, 9 zueinander ein- und ausgeschaltet werden, wozu die nachstehend beschriebenen Ausführungsbeispiele der Schalter-Einrichtung 18 dienen.

Das in Figur 1 dargestellte erste Ausführungsbeispiel der Schalter-Einrichtung 18 weist ein erstes Schaltelement 18a, das im wesentlichen aus einen Transistor T₁ und eine parallel dazu geschaltete Diode D₁ sowie einen Transistor T₂ und eine parallel dazu geschaltete Diode D₂ auf, die derart geschaltet sind, daß bei einer definierten Pollage des Elektromotors der Strom durch eine Diode D₁ bzw. D₂ und den Transistor T₂ bzw. T₁ fließt.

In Figur 1 wird beipielhaft davon ausgegangen, daß der Transistor T₁ leitend ist, wenn die Permanent-Magneten 8 mit ihrem Nordpol den Motor-Rotor 7 beaufschlagen, und daß der Transistor T₂ leitend ist, wenn die Südpole der Permanent-Magneten 8 den Motor-Rotor 7 beaufschlagen. In diesem Fall fließt der Strom, bedingt durch die Pollage des Motor-Rotors 7, durch die Diode D₁ und den Transistor T₂, während bei einer Änderung der Pollage der Strom durch die Diode D₂ und den Transistor T₁ fließt, was voraussetzt, daß bei einer Änderung der Pollage der Transistor T₂ abgeschaltet werden muß. Dies bedingt aufgrund der Induktivität L der Wicklung 11 die bereits eingangs erwähnten extrem hohen Spannungsspitzen, die proportional zur Induktivität L der Kurzschlußwicklung 11 und der zeitlichen Ableitung der Stromänderung am Kollektor des Transistors T₂ (T₁) sind, so daß also die Spannungsspitzen umso höher sind, je kürzer die Abschaltzeit des Transistors T₂ (T₁) ist, d. h., je höher die Drehzahl der Generator-Elektromotor-Kombination ist.

Erfindungsgemäß ist nun vorgesehen, daß die wenigstens eine Wicklung 11 des Stators 10 durch eine Anzapfung 31 in zwei Teilwicklungen 11a, 11b mit einer Induktivität von L₁ bzw. L₂ aufgeteilt wird. Vorzugsweise ist hierbei vorgesehen, daß die Anzapfung 31 eine Mittenanzapfung ist, durch die die Kurzschlußwicklung 11 in zwei gleiche Wicklungsteile 11a und 11b mit jeweils einer Induktivität von L₁ = L₂ = L/4 aufgeteilt ist. Im folgenden wird der einfacheren Beschreibung halber von dem bevorzugten Fall der Mittenanzapfung ausgegangen. Diese schränkt die Allgemeingültigkeit der nachfolgenden Erläuterungen nicht ein, daß es dem Fachmann ohne weiteres geläufig ist, den beschriebenen Fall der Mittenanzapfung auf den allgemeineren Fall von zwei Wicklungsteilen 11a und 11b mit zwei ungleichen Teil-Induktivitäten zu verallgemeinern.

In der Anzapfung 31 ist ein Kondensator 32, der einen frequenzabhängigen Widerstand und einen Energiespeicher darstellt, geschaltet. Die aus vorstehend genannten Gründen hohe Frequenz des Abschaltstroms bewirkt nun, daß der Kondensator 32 niederohmig wird, so daß der Wicklungsteil 11b praktisch vom Wicklungsteil 11a getrennt ist. Die im Wicklungsteil 11b befindliche Energie wird auf den Wicklungsteil 11a transformiert, wobei diese Transformation umso besser ist, je besser die Kopplung dieser Wicklungsteile 11a, 11b ist. Der Strom fließt nach der Transformation im Wicklungsteil 11a in unveränderter Richtung weiter, wodurch die Energie aus dem Wicklungsteil 11a in den Kondensator 32 abfließt, so daß sich an diesem die anliegende Spannung erhöht.

Durch die beschriebene Anzapfung und die dadurch bewirkte Teilung der Wicklung 11 in die Wicklungsteile 11a, 11b wird vorteilhafterweise bewirkt, daß infolge der reduzierten Induktivität der Wicklungsteile 11a, 11b die Spannungsspitze am abschaltenden Transistor T₂ nur einen Bruchteil (in dem hier gezeigten Fall nur 1/4) der ansonsten zu erwartenden Spannungsspitze ist, so daß in vorteilhafter Art und Weise die Gefahr einer Beschädigung oder Zerstörung der Leistungshalbleiter T₁ , T₂ , D₁, D₂ durch hohe Spannungsspitzen reduziert wird.

Wird nun im darauffolgenden Zyklus der Transistor T₁ angesteuert, so entlädt sich der Kondensator 32 über den Transistor T₁ und die Diode D₂, so daß der Strom in der Kurzschlußwicklung 11 im wesentlichen gleich in die richtige Richtung läuft.

In Figur 2 ist ein zweites Ausführungsbeispiel einer Schalt-Einrichtung 18 dargestellt, welches im wesentlichen wie das in Figur 1 dargestellte erste Ausführungsbeispiel aufgebaut ist, so daß gleiche oder einander entsprechende Teile mit gleichen Bezugszeichen versehen werden können und nicht mehr näher beschrieben werden müssen.

Der wesentliche Unterschied zwischen den beiden Ausführungsbeispielen besteht darin, daß zur Unterdrückung eventueller Schwingungen, die durch einen LC-Schwingkreis, wie er durch die Kurzschlußwicklung 11 und den Kondensator 32 ausgebildet wird, vorgesehen ist, den Kondensator 32 in bestimmten Zuständen ab- und zuzuschalten. Hierzu ist vorgesehen, daß dem Kondensator 32 in der Anzapfung 31 eine allgemein mit 40 bezeichnete Schwingungsdämpfungsanordnung vorgeschalten ist, die im wesentlichen aus einem weiteren Transistor T₃, einer parallel dazu geschalteten Diode D₃ und einer mit der Anzapfung 31 verbundenen Zenerdiode ZD besteht, welche zum Schalten des Transistors T₃ dient. Die Zenerdiode ZD ist so ausgewählt, daß der Transistor T₃ nur beim Auftreten von Spannungsspitzen leitend wird, sonst aber abgeschaltet ist.

### BEZUGSZEICHENLISTE

- 1: Gehäuse
- 2: Eingangswelle
- 3: Ausgangswelle
- 4: Lager
- 5: Lager
- 6: Generator-Rotor
- 7: Elektromotor-Rotor
- 8: Permanent-Magnet
- 9: Permanent-Magnet
- 10: Stator
- 11: Wicklung
11a Wicklungsteil
11b Wicklungsteil
- 12: Statorträger
- 13: Schiebehülse
- 15: Stange
- 16: Lager
- 17: Lager
- 18: Schalter-Einrichtung
18a Schaltelement
- 25: Öffnung
- 31: Anzapfung
- 32: Kondensator
- D1: Diode
- D2: Diode
- D3: Diode
- T1: Transistor
- T2: Transistor
- T3: Transistor

## Patentansprüche

1. Einrichtung zum Schalten von Strömen in einer Statorwicklung einer Generator-Elektromotor-Kombination, wobei die Statorwicklung mindestens eine Wicklung (11) aufweist, die durch die Einrichtung (18) kurzschließbar oder hochohmig schaltbar ist, **dadurch gekennzeichnet, daß** die Wicklung (11) mit einer Induktivität L durch mindestens eine Anzapfung (31) in zwei Wicklungsteile (11a, 11b) mit einer Induktivität von L₁ bzw. L₂ aufgeteilt ist, und daß in die Anzapfung (31) ein Kondensator (32) geschaltet ist, der bei einer Beaufschlagung durch einen hochfrequenten Abschaltstrom die beiden Wicklungsteile (11a, 11b) der Wicklung (11) zumindest teilweise elektrisch trennt.

2. Einrichtung nach Anspruch 1, **dadurch gekennzeichnet, daß** die Anzapfung (31) eine Mittenanzapfung ist, durch die die Wicklung (11) in zwei Wicklungsteile (11a,11b) mit einer im wesentlichen gleichen Induktivität L₁ = L₂ = L/4 aufgeteilt ist.

3. Einrichtung nach einem der vorangehenden Ansprüche, **dadurch gekennzeichnet, daß** die Einrichtung (18) ersten Schaltkondensator (T₁) und eine parallel dazugeschaltete erste Diode (D₁) und einen zweiten Schaltkondensator (T₂) und eine parallel dazugeschaltete zweite Diode (D₂) aufweist, wobei bei einer definierten Pollage von Permanent-Magneten (8, 9) der Generator-Elektromotor-Kombination ein Strom (I) durch die erste Diode (D₁) und den zweiten Schalttransistor (T₂) und bei einer der ersten Pollagen entgegengesetzten zweiten Pollage der Permanent-Magneten (8, 9) durch die zweite Diode (D₂) und den ersten Schalttransistor (T₁) fließt.

4. Einrichtung nach einem der vorangehenden Ansprüche, **dadurch gekennzeichnet, daß** die Einrichtung (18) eine Schwingungsdämpfungsanordnung (40) zur Unterdrückung von durch die Kurzschlußwicklung (11) und den Kondensator (32) hervorgerufenen Schwingungen aufweist.

5. Einrichtung nach Anspruch 6, **dadurch gekennzeichnet, daß** die Schwingungsdämpfungsanordnung (40) einen dritten Schalttransistor (T₃) und eine parallel dazugeschaltete dritte Diode (D₃) aufweist, und daß die Ansteuerung des dritten Schalttransistors (T₃) durch eine mit der Anzapfung (31) verbundene Zenerdiode (ZD) folgt.

6. Generator-Elektromotor-Kombination, **gekennzeichnet durch** eine Einrichtung (18) für das Schalten von Strömen in ihrer Statorwicklung (11) gemäß einem der Ansprüche 1-5.

7. Generator-Elektromotor-Kombination nach Anspruch 7, **dadurch gekennzeichnet, daß** die Generator-Elektromotor-Kombination ein Gehäuse (1) aufweist, in dem ein Rotor und der Stator sowohl des Generators als auch des Elektromotors angeordnet sind, die einen an einen Eingangswelle (2) befestigten hohlzylindrischen Generator-Rotor (6) und einen an einer Ausgangswelle (3) befestigten hohlzylindrischen Motor-Rotor (7) aufweist, wobei die Rotoren (6, 7) axial nebeneinander liegen und an ihrer Innenseite in Umfangsrichtung verteilt Permanent-Magnete (8, 9) wechselnder Polarität aufweisen, und daß die Generator-Elektromotor-Kombination einen innerhalb der hohlzylindrischen Rotoren (6, 7) angeordneten hohlzylindrischen Stator mit wenigstens einer Wicklung (11), die abhängig von der Stellung der Permanent-Magneten (8, 9) der beiden Rotoren (6, 7) zueinander geschaltet werden, besitzt, wobei die Wicklung (11) je nach gewünschter Kraftrichtung des Elektromotors durch wechselseitiges Schalten durch die Einrichtung (18) je nach Pollage des Elektromotors kurzschließbar oder hochohmig schaltbar ist.

## Claims

1. Device for switching currents in a stator winding of a combined electric generator and motor, where the stator winding comprises at least one winding (11) that can be short-circuited or switched to high impedance by the device (18), **characterized in that** the winding (11) having an inductance L is divided by at least one tap (31) into two sub-windings (11a, 11b) having an inductance of L₁ and L₂ respectively, and that a capacitor (32) is connected in the tap (31), which at least partially isolates electrically the two sub-windings (11a, 11b) of the winding (11) when a high frequency switch-off current is applied to it.

2. Device according to Claim 1, **characterized in that** the tap (31) is a centre tap, which divides the winding (11) into two sub-windings (11a, 11b) having a substantially equal inductance L₁ = L₂ = L/4.

3. Device according to one of the preceding claims, **characterized in that** the device (18) comprises a first switching transistor (T₁) and a first diode (D₁) connected in parallel with it, and a second switching transistor (T₂) and a second diode (D₂) connected in parallel with it, where a current (I) flows through the first diode (D₁) and the second switching transistor (T₂) for a defined pole position of permanent magnets (8, 9) of the combined electric generator and motor, and through the second diode (D₂) and the first switching transistor (T₁) for a second pole position of the permanent magnets (8, 9) that is opposite to the first pole position.

4. Device according to one of the preceding claims, **characterized in that** the device (18) comprises an oscillation-damping arrangement (40) for suppressing oscillations produced by the short-circuit winding (11) and the capacitor (32).

5. Device according to Claim 6, **characterized in that** the oscillation-damping arrangement (40) comprises a third switching transistor (T₃) and a third diode (D₃) connected in parallel with it, and that the third switching transistor (T₃) is driven on by a Zener diode (ZD) connected to the tap (31).

6. Combined electric generator and motor, **characterized by** a device (18) for switching currents in its stator winding (11) according to one of the Claims 1 - 5.

7. Combined electric generator and motor according to Claim 7, **characterized in that** the combined electric generator and motor comprises a housing (1) in which are arranged a rotor and the stator of both the generator and the electric motor, said combined electric generator and motor having a hollow cylindrical generator rotor (6) fixed to an input shaft (2), and a hollow cylindrical motor rotor (7) fixed to an output shaft (3), where the rotors (6, 7) lie axially parallel and have permanent magnets (8, 9) distributed around their inner circumference of alternating polarity, and that the combined electric generator and motor has a hollow cylindrical stator arranged inside the hollow cylindrical rotors (6, 7), said stator having at least one winding (11) that is switched according to the mutual position of the permanent magnets (8, 9) of the two rotors (6, 7), where the winding (11), according to the required force direction of the electric motor, can be short-circuited or switched to high impedance by the device (18) according to the pole position of the electric motor.

## Revendications

1. Dispositif de commutation des courants dans un enroulement statorique d'une combinaison générateur/moteur électrique, dans lequel l'enroulement statorique présente au moins une bobine (11) qui peut être commutée en court-circuit ou à haute impédance par le dispositif (18), **caractérisé en ce que** la bobine (11) ayant une inductance L est divisée par au moins une prise (31) en deux bobines partielles (11a, 11b) d'inductance L₁, respectivement L₂, et **en ce que** dans la prise (31) est monté un condensateur (32) qui, lors d'une sollicitation par un courant de coupure de haute fréquence, sépare électriquement au moins partiellement les deux bobines partielles (11a, 11b) de la bobine (11).

2. Dispositif selon la revendication 1, **caractérisé en ce que** la prise (31) est une prise médiane, qui permet de diviser la bobine (11) en deux bobines partielles (11a, 11b) ayant une inductance sensiblement identique L₁ = L₂ = L/4.

3. Dispositif selon l'une quelconque des revendications précédentes, **caractérisé en ce que** le dispositif (18) présente un premier transistor de commutation (T₁) et une première diode (D₁) montée en parallèle avec celui-ci ainsi qu'un deuxième transistor de commutation (T₂) et une deuxième diode (D₂) montée en parallèle avec celui-ci, où, pour une position de pôles définie d'aimants permanents (8, 9) de la combinaison générateur/moteur électrique, un courant (I) circule à travers la première diode (D₁) et le deuxième transistor de commutation (T₂) et, pour une deuxième position de pôles opposée à la première position de pôles des aimants permanents (8, 9), le courant circule à travers la deuxième diode (D₂) et le premier transistor de commutation (T₁).

4. Dispositif selon l'une quelconque des revendications précédentes, **caractérisé en ce que** le dispositif (18) présente un système d'amortissement des oscillations (40) pour supprimer les oscillations provoquées par la bobine de court-circuit (11) et le condensateur (32).

5. Dispositif selon la revendication 6, **caractérisé en ce que** le système d'amortissement des oscillations (40) présente un troisième transistor de commutation (T₃) et une troisième diode (D₃) montée en parallèle avec celui-ci, et **en ce que** la commande du troisième transistor de commutation (T₃) s'effectue par une diode Zener (ZD) connectée à la prise (31).

6. Combinaison générateur/moteur électrique **caractérisée par** un dispositif (18) pour la commutation des courants dans un enroulement statorique (11) selon l'une quelconque des revendications 1 à 5.

7. Combinaison générateur/moteur électrique selon la revendication 6, **caractérisée en ce que** la combinaison générateur/moteur électrique présente un boîtier (1) dans lequel sont disposés un rotor et le stator du générateur et du moteur électrique, qui présente un rotor de générateur (6) cylindrique creux fixé sur un arbre d'entrée (2) et un rotor de moteur (7) cylindrique creux fixé sur un arbre de sortie (3), les rotors (6, 7) étant disposés axialement l'un à côté de l'autre et présentant sur leur côté interne des aimants permanents (8, 9) répartis dans la direction périphérique, avec alternance de polarités, et **en ce que** la combinaison générateur/moteur électrique présente un stator cylindrique creux disposé à l'intérieur des rotors cylindriques creux (6, 7) avec au moins une bobine (11), qui est commutée indépendamment de la position des aimants permanents (8, 9) des deux rotors (6, 7) l'un par rapport à l'autre, la bobine (11) pouvant être commutée en court-circuit ou à haute impédance en fonction du sens de la force souhaité du moteur électrique, par commutation alternée par le dispositif (18) en fonction de la position des pôles du moteur électrique.
